**Europäisches Patentamt**

**European Patent Office**

**Office européen des brevets**

(11) Numéro de publication : **0 487 376 B1**

(12)

# FASCICULE DE BREVET EUROPEEN

(45) Date de publication du fascicule du brevet :
**17.05.95 Bulletin 95/20**

(51) Int. Cl.⁶ : **H04B 14/00, G06F 15/80**

(21) Numéro de dépôt : **91402993.9**

(22) Date de dépôt : **07.11.91**

(54) **Procédé et dispositif de reconnaissance de modulations.**

(30) Priorité : **16.11.90 FR 9014294**

(43) Date de publication de la demande :
**27.05.92 Bulletin 92/22**

(45) Mention de la délivrance du brevet :
**17.05.95 Bulletin 95/20**

(84) Etats contractants désignés :
**DE ES GB IT**

(56) Documents cités :
**WO-A-91/02323**
**US-A- 4 845 707**
**Soviet Inventions Illustrated, Section El.,**
**Semaine 8349, 25. janvier 1984.Derwent Publi-**
**cations Ltd., Londres, GB.**

(73) Titulaire : **THOMSON-CSF**
**173, Boulevard Haussmann**
**F-75008 Paris (FR)**

(72) Inventeur : **Lobert, Bruno**
**THOMSON-CSF,**
**SCPI,**
**Cédex 67**
**F-92045 Paris la Défense (FR)**
Inventeur : **Sourdillat, Bruno**
**THOMSON-CSF,**
**SCPI,**
**Cédex 67**
**F-92045 Paris la Défense (FR)**

(74) Mandataire : **Lincot, Georges et al**
**THOMSON-CSF,**
**SCPI,**
**B.P. 329,**
**50, rue Jean-Pierre Timbaud**
**F-92402 Courbevoie Cédex (FR)**

EP 0 487 376 B1

## Description

La présente invention concerne un procédé et un dispositif de reconnaissance de modulations à partir de spectres instantanés.

Pour reconnaître la classe de modulation de plusieurs émissions radio-électriques, il existe plusieurs techniques telles que celles décrites par exemple dans les articles suivants intitulés :

- "Automatic Classification of High Frequency Signals", Friedrich JONDRAL, member EURASIP, AEG TELEFUNKEN, Signal processing 9 (1985) p. 177-190 ;
- "Computer Simulation of an Automatic Classification Procedure for Digitally Modeled Communication Signals with Unknown Parameters", F.F. LIEDTKE (FGAN), Signal processing 6 (1984) p. 311-323 ;
- "Automatic Modulation Recognition Using Domain Parameters", Janet AISBETT, Electronics Research Laboratory, Defense Science and Technology Organization, Department of Defense Australia, Signal processing 13 (1987) p. 323-328 ;
- "Sampling and Algorithms and Modulation Recognition", T.G. CALLAGHAN WATKINS-JOHNSON, Microwaves and RF September 1985 ;
- "Modulation Clasification Based on Statistical Moments", Jackie E. HIPP, ph. D., Southwest Research Institute, San Antonio, Texas, 1986 IEEE ;
- "Receiver Recognition of Analogue Modulation Types", P.M FABRIZA, L.B. LOPES and G.B. LOCKHART.

Celles-ci ne permettent cependant pas la reconnaissance d'émissions de façon simultanée lorsque la bande de fréquence surveillée est très étendue, car les signaux traités sont toujours issus de démodulateurs qui ont des bandes passantes limitées.

D'autre part, l'acquisition précise des fréquences porteuses qui est effectuée généralement au moyen de synthétiseurs de fréquence prend un temps qui est préjudiciable à la rapidité des traitements.

Egalement, suivant d'autres méthodes connues, la classification des émissions a lieu en mettant en oeuvre des algorithmes de maximum de vraisemblance appliqués sur un nombre déterminé de paramètres, ces paramètres résultant d'une synthèse plus ou moins parfaite de l'information au niveau de l'émission des informations portées par chaque canal. Cette synthèse qui a pour but de réduire la redondance et l'interdépendance des paramètres est en général nécessaire pour permettre l'application de méthodes de classification particulières comme celle par exemple connue sous le nom de méthode de classification de BAYES. Cependant, les algorithmes mis en oeuvre et nécessaires pour réduire la redondance et l'interdépendance des paramètres nécessite de longues opérations de traitement qui prennent du temps de calcul et qui sont préjudiciables à la rapidité des détections mises en oeuvre.

Le but de l'invention est de pallier les inconvénients pré-cités.

Le procédé de reconnaissance de la modulation d'émissions radio-électriques à partir de spectres instantanés d'émission relevés dans une bande de fréquence déterminée par un analyseur de spectre à transformée de Fourier rapide du type consistant à calculer les paramètres suivants pour chaque raie de spectre d'émission relevé dans la bande de fréquence déterminée, une amplitude moyenne de toutes les raies k des spectres contenus dans la bande de fréquence déterminée, un rapport signal à bruit RSBk, un écart type ETk en amplitude de chaque raie du spectre et un coefficient de corrélation COR(k,k') d'amplitude de chaque raie k avec les raies homologues des spectres des émissions contenues dans la bande de fréquence déterminée caractérisé en ce qu'il consiste à comparer au travers d'un réseau neurones les paramètres de chaque spectre d'émission à des paramètres d'émission attendue, et à déclarer qu'une émission correspond à une émission attendue lorsque l'écart détecté par la comparaison entre les paramètres de l'émission et ceux attendus est minimum.

D'autres caractéristiques et avantages de l'invention apparaîtront à l'aide de la description qui suit faite en regard des dessins annexés qui représentent :

- la figure 1 un mode de réalisation d'un dispositif selon l'invention ;
- la figure 2 un mode d'organisation du réseau de neurones de la figure 1 ;
- la figure 3 une représentation schématique d'un neurone ;
- la figure 4 une courbe de réponse d'un neurone.

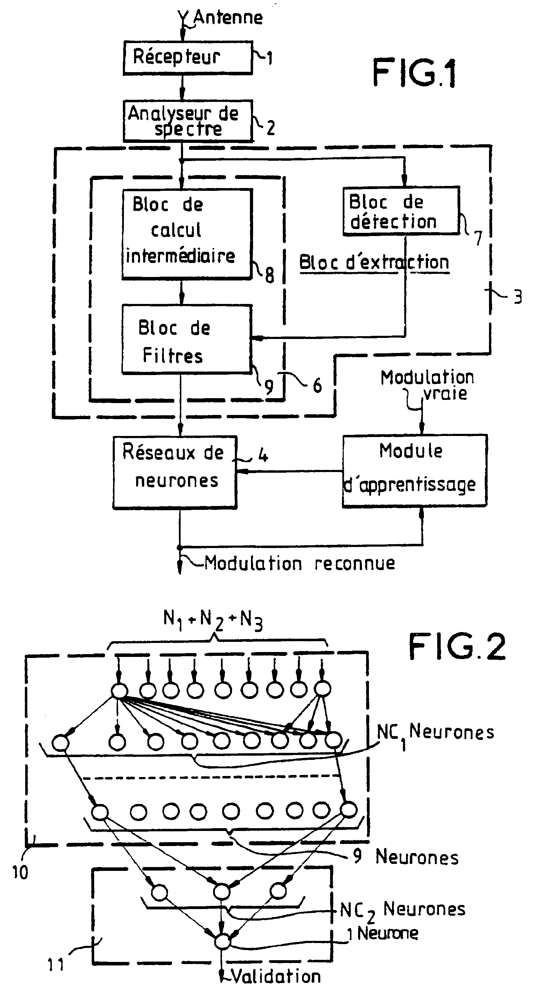

Le dispositif représenté à la figure 1 comprend un récepteur 1, un analyseur de spectre 2, un bloc d'extraction 3, représenté à l'intérieur d'une ligne fermée en pointillés, un réseau de neurones 4 et un module d'apprentissage 5. Le bloc d'extraction 3 comprend un bloc de calcul de paramètres primaires 6 représenté à l'intérieur d'une ligne fermée en pointillés et un bloc de détection 7.

Le bloc de calcul des paramètres primaires 6 est formé d'un bloc de calcul intermédiaire 8 et d'un bloc de filtres 9.

Le récepteur 1, est un récepteur radio à large bande, calé sur la fréquence centrale de la bande de fréquence à analyser. Le signal capté par le récepteur est filtré de façon connue en sortie des étages de fréquence intermédiaire de celui-ci. Ce récepteur est réalisé de façon connue pour capter des signaux radio fréquence transmis dans la bande HF normalisée par la commission des communications fédérale des Etats-Unis connue encore sous l'abréviation FCC, ladite bande normalisée s'étendant dans la gamme 3 à 30 MHz correspondant à des longueurs d'onde de 100 à 10 mètres c'est-à-dire des ondes décamétriques. Ces signaux peuvent être modulés suivant des modulations normalisées du type A0, A1, A3, A3H+, A3H-, A3J+, A3J-, F3, F1. L'analyseur de spectre 2 comprend de façon connue un convertisseur analogique numérique et un bloc de calcul non représentés. Le convertisseur analogique fournit 2N point résultant de l'échantillonnage à la vitesse 2B de la bande du signal à analyser.

Le signal fourni par le convertisseur analogique numérique est multiplié également de façon connue par une fenêtre de pondération du type "Blackman-Harris à quatre termes".

Le bloc de calcul intermédiaire 8 effectue le calcul d'une raie sur deux du spectre du signal en appliquant aux échantillons du signal fourni par la fenêtre de pondération une transformation de FOURIER rapide encore connue sous l'abréviation FFT, suivant les méthodes décrites par exemple dans le livre de E. ORAN BRIGHAM ayant pour titre "the Fast Fourier Transform" Printice Hall Inc. Englewood Cliffs New Jersey 1974, ou dans le livre de P.M. BEAUFILS et RAMI ayant pour titre "le filtrage numérique" p. 117 à 135 édité par SYBEX en 1986.

La résolution obtenue est égale à deux B/N.

Les résultats de calcul de la FFT sont fournis suivant une période DeltaT et une résolution DeltaF fixe (exemples DeltaT = 2 à 8 ms, DeltaF = 1 KHz à 250 Hz).

Le bloc d'extraction est composé des blocs de calcul de paramètre 6 et de bloc de détection 7 pour permettre de traiter l'ensemble des émissions de la bande B en temps réel. Le bloc de calcul intermédiaire 8 anticipe le plus possible le calcul des paramètres primaires par des calculs répétitifs identiques pour tous les canaux et indépendants des émissions présentes dans la bande B du récepteur 1.

Le bloc de détection 7 calcule à partir des résultats des calculs intermédiaires, la position dans la bande B des différents émetteurs, (début, fin) et il estime le niveau de bruit NVB.

Le bloc de filtres 9 calcule à partir des informations de calcul intermédiaire et de position des émetteurs dans la bande B, les vecteurs de forme de chaque émission constituée par les valeurs des paramètres primaires.

Le bloc d'extraction 3 exécute ces tâches de façon périodique, la période étant un multiple M de DeltaT. En fixant par exemple M à 300 spectres et DeltaT à 4 ms, la période d'extraction est alors de 1,2 secondes.

Pendant chaque période d'extraction, le bloc d'extraction 3 calcule pour chaque canal k de la bande B le rapport signal à bruit RSB, l'écart type en amplitude ETk et un coefficient de corrélation COR k, k' inter-raie du canal k avec un nombre déterminé de canaux fixés, par exemple égal à 9 tel que k'= k + 1 à k + 9 qui fixe également la largeur de bande LB de chaque canal. Ces calculs sont effectués conjointement par les blocs de calcul intermédiaires 8, de détection 7 et le filtre 9 qui sont formés de façon connue par des processeurs de traitement du signal convenablement programmés.

Ces processeurs sont programmés pour effectuer les opérations de calcul de rapport signal à bruit RSBk de chaque canal k, les calculs d'écart type ETk sur l'amplitude de chaque canal k et des calculs de coefficient de corrélation COR (k, k') entre les variations d'amplitude des canaux k et k'.

Le calcul du rapport signal à bruit RSBk pour un canal k a lieu en considérant l'amplitude $AM_k$ de la raie k de chaque spectre n et en calculant l'amplitude moyenne $A_{nk}$ de la raie k durant la période d'extraction suivant les relations.

$$AM_k = \frac{1}{M} \sum_{m=1}^{M} A_{m,k} \text{ en dBm} \qquad (1)$$

et

$$RSBk = AM_k - NVB \text{ en dBm} \qquad (2)$$

où NVB correspond au niveau moyen de bruit.

Les calculs de l'écart type ETk des paramètres COR(k,k') ont lieu en application des relations :

$$ETk = [\frac{1}{M} \sum_{m=1}^{M} (A_{m,k} - AM_k)^2]^{\frac{1}{2}} \qquad (3)$$

$$COR(k,k') = \frac{\sum_{m=1}^{M} (A_{m,k} - AM_k)(A_{m,k'} - AM_{k'})}{\left[ \sum_{m=1}^{M} (A_{m,k} - AM_k)^2 \sum_{m=1}^{M} (A_{m,k'} - AM_{k'})^2 \right]^{\frac{1}{2}}} \qquad (4)$$

Le bloc de filtre 9 effectue ensuite la sélection de N1 valeur de rapport signal à bruit RSBk, de N2 valeurs d'écart type ETk et de N3 valeurs des coefficients de corrélation COR(k,k').

Les canaux sélectionnés sont pris arbitrairement à partir du centre de l'émission. Si la largeur de bande de l'émission est trop faible les valeurs manquantes sont complétées par des quantités moyennes. A titre d'exemple, un choix possible peut être déterminé comme suit avec N1 = 7, N2 = 5 et N3 = 10.

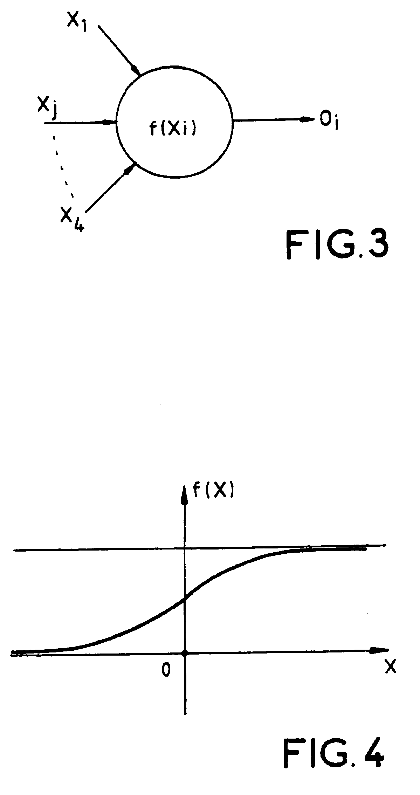

Un mode de réalisation du réseau de neurones 4 est représenté à la figure 2. Ce réseau comporte deux sous-réseaux 10 et 11. Le sous-réseau 10 comprend également NC1 neurones cachés ainsi que 9 neurones de sortie, un par type de modulation. Le sous-réseau 11 est couplé au premier sous-réseau 10 et comprend 9 entrées correspondant aux 9 sorties du sous-réseau 10, NC2 neurones cachés et une sortie correspondant à l'information de validation. Dans l'architecture représentée à la figure 2 chaque neurone utilisé du type connu des neurones sygmoïdes dont un schéma de principe est représenté à la figure 3. Suivant ce type d'organisation l'état électrique de la sortie d'un neurone est défini en fonction de l'état de ces entrées par une relation de la forme :

$$O_i = \frac{1}{1 + Exp\left(-\sum_{j=i}^{N_i} Omega_{ji} \cdot X_j - Téta_i\right)} \qquad (5)$$

- ou $O_i$ désigne la sortie du neurone i,
- Teta$_i$ désigne le seuil associé au neurone i,
- $X_j$ désigne l'entrée j du neurone i,
- $N_i$ est le nombre d'entrée du neurone i,
- et Omega$_{ji}$ désigne le poids attribué à l'entrée j.

A partir des paramètres issus du bloc de filtre 9 le réseau calcule les sorties de tous les neurones par application de la relation (5).

Le type de modulation trouvé est celui pour lequel le neurone associé présente un niveau de signal de sortie maximal. A partir des sorties du sous-réseau 10, le sous-réseau 11 calcule une information de validation. Si cette information de validation est supérieure à un seuil S la reconnaissance est validée sinon il y a rejet. L'apprentissage effectué par le bloc d'apprentissage 5 est de type de celui connu sous la désignation "rétro-propagation" qui est décrite dans l'article parallèle "Distributed Processing" de Rummel Hartington WILLIAMS de 1986. Cet apprentissage consiste pour chaque entrée présentée, à comparer la sortie du réseau avec la sortie attendue. La différence constitue un vecteur d'erreur utilisé pour corriger les poids Omega$_{ji}$ des neurones de sortie.

L'erreur est ensuite rétro-propagée suivant un algorithme de type gradient. Les corrections s'effectuent alors de la sortie vers l'entrée du réseau. L'apprentissage a lieu d'abord en corrigeant les coefficients Omega$_{ji}$ du sous-réseau 10 puis ceux du sous-réseau 11.

**Revendications**

1. Procédé de reconnaissance de la modulation d'émissions radio-électriques à partir de spectres instantanés d'émissions relevés dans une bande de fréquence déterminée par un analyseur de spectre (2) à transformée de Fourier rapide du type consistant à calculer (3) les paramètres suivants pour chaque raie de spectre d'émission relevé dans la bande de fréquence déterminée, une amplitude moyenne de toutes les raies k des spectres contenus dans la bande de fréquence déterminée, d'un rapport signal à bruit RSBk, un écart type ETk en amplitude de chaque raie du spectre et un coefficient de corrélation COR(k, k') d'amplitude de chaque raie k avec les raies homologues des spectres des émissions contenues dans la bande de fréquence déterminée caractérisé en ce qu'il consiste à comparer au travers d'un réseau neurones les paramètres de chaque spectre d'émission à des paramètres d'émission attendue, et à déclarer qu'une émission correspond à une émission attendue lorsque l'écart détecté par la comparaison entre les paramètres de l'émission et ceux attendus est minimum.

2. Procédé selon la revendication 1 caractérisé en ce qu'il consiste à associer dans le réseau de neurones, un neurone à chaque type de modulation.

3. Procédé selon la revendication 2 caractérisé en ce qu'il consiste à déclarer qu'un type de modulation est trouvé lorsque le niveau de sortie du neurone associé est maximum.

4. Procédé selon l'une quelconque des revendications 2 et 3 caractérisé en ce que le niveau de sortie Oi d'un neurone i est déterminé par une relation de la forme :

$$Oi = \frac{1}{1 + Exp(-\sum_{j=1}^{Ni} Omega_{ij} X_j - Teta_i)}$$

où :
- $Teta_i$ désigne un seuil associé au neurone i :
- $X_j$ désigne une entrée j
- $N_i$ est le nombre d'entrées du neurone i
- et $Omega_{ij}$ désigne le poids attribué à l'entrée j.

5. Procédé selon l'une quelconque des revendications 2 et 3 caractérisé en ce que le niveau de sortie $O_i$ d'un neurone est déterminé par une relation de la forme :

$$O_i = SIGN \left( \sum_{j=1}^{N_i} Omega_{ij} X_j - Teta_i \right)$$

où :
- $Teta_i$ désigne un seuil associé au neurone i
- $X_j$ désigne une entrée j
- $N_i$ est le nombre d'entrées du neurone i et $Omega_{ij}$ désigne le poids attribué à l'entrée j.

6. Procédé selon l'une quelconque des revendications 1 à 4 caractérisé en ce qu'il consiste à ajuster dans une phase d'apprentissage les poids Omega $_{ij}$ de chaque neurone correspondant à un type d'émission attendu en comparant pour chaque émission attendue la sortie du réseau avec la sortie attendue en rétropageant l'erreur obtenue suivant un algorithme de type gradient qui minimise cette erreur.

7. Dispositif pour la mise en oeuvre du procédé selon l'une quelconque des revendications 1 à 6 caractérisé en ce qu'il comprend un récepteur (1) couplé à un réseau de neurones (4) par l'intermédiaire d'un analyseur de spectres (2) et d'un dispositif d'extraction de paramètres d'émission (3).

**8.** Dispositif selon la revendication 7 caractérisé en ce que le dispositif d'extraction comprend un bloc de filtres (9) de détermination de paramètre primaire d'émissions couplé à un bloc de calcul intermédiaire (8) et à un bloc de détection d'émission (7).

**9.** Dispositif selon la revendication 8 caractérisé en ce que le bloc de filtres (9), le bloc de calcul intermédiaire (8) et le bloc de détection d'émission (7), sont fournis par des processeurs de traitement du signal.

**10.** Dispositif selon la revendication 9 caractérisé en ce qui les processus de traitement du signal sont programmés pour calculer pour chaque raie k de spectre d'émission, une amplitude moyenne des raies de rang k des spectres contenus dans la bande de fréquence, un rapport signal à bruit RSBk, un écart type ETk en amplitude et un coefficient de corrélation COR(k, k') d'amplitude avec les raies homologues dans les spectres d'émission contenues dans la bande de fréquence.

## Claims

**1.** Method for the recognition of the modulation of radioelectrical transmissions from instantaneous spectra of transmissions observed in a determined frequency band by a Fast Fourier Transform spectrum analyzer (2), consisting in computing (3) the following parameters for each transmission spectrum line observed in the determined frequency band, a mean amplitude of all the lines k of the spectra contained in the determined frequency band, with a signal-to-noise ratio RSBk, a standard deviation ETk in the amplitude of each line of the spectrum, and a coefficient of correlation COR(k, k') of the amplitude of each line k with the homologous lines of the transmission spectra contained in the determined frequency band, characterized in that it consists in making a comparison, through a network of neurons, of the parameters of each transmission spectrum with expected transmission parameters, and declaring that a transmission corresponds to an expected transmission when the deviation detected by the comparison between the parameters of the transmission and the expected parameters is a minimum.

**2.** Method according to Claim 1, characterized in that it consists in associating, in the network of neurons, a neuron with each type of modulation.

**3.** Method according to Claim 2, characterized in that it consists in declaring that a type of modulation is found when the output level of the associated neuron is a maximum.

**4.** Method according to either Claim 2 or 3, characterized in that it consists in determining the output level Oi of a neuron i by a relationship of the form:

$$Oi = \frac{1}{1 + Exp(-\sum_{j=1}^{Ni} Omega_{ij}X_j - Teta_i)}$$

where:
- Theta$_i$ designates a threshold associated with the neuron i,
- X$_j$ designates an input j,
- N$_i$ is the number of inputs of the neuron i,
- and Omega$_{ij}$ designates the weight assigned to the input j.

**5.** Method according to either Claim 2 or 3, characterized in that it consists in determining the output level O$_i$ of a neuron by a relationship of the form:

$$O_i = SIGN \left( \sum_{j=1}^{N_i} Omega_{ij} X_j - Teta_i \right)$$

where:
- $Theta_i$ designates a threshold associated with the neuron i,
- $X_j$ designates an input j,
- $N_i$ is the number of inputs of the neuron i, and $Omega_{ij}$ designates the weight assigned to the input j.

6. Method according to any one of Claims 1 to 4, characterized in that it consists in adjusting, in a learning phase, the weights $Omega_{ij}$ of each neuron corresponding to an expected type of transmission while comparing, for each expected transmission, the output of the network with the expected output while retro-propagating the error obtained according to a gradient type algorithm which minimizes this error.

7. Device for the implementation of the method according to any one of Claims 1 to 6, characterized in that it comprises a receiver (1) coupled to a network of neurons (4) by means of a spectrum analyzer (2) and a device for the extraction of transmission parameters (3).

8. Device according to Claim 7, characterized in that the extraction device comprises a block of filters (9) for primary transmission parameter determination coupled to an intermediate computation block (8) and to a transmission detection block (7).

9. Device according to Claim 8, characterized in that the block of filters (9), the intermediate computation block (8) and the transmission detection block (7) are provided by signal processors.

10. Device according to Claim 9, characterized in that the signal processing routines are programmed to compute, for each transmission spectrum line k, a mean amplitude of the order k lines of the spectra contained in the frequency band, a signal-to-noise ratio RSBk, a standard deviation ETk in amplitude and a coefficient of correlation COR(k,k') of the amplitude with the homologous lines of the transmission spectra contained in the frequency band.

## Patentansprüche

1. Verfahren zur Erkennung der Modulation von radioelektrischen Sendungen anhand von momentanen, durch einen Spektralanalysator (2) mit schneller Fourier-Transformation aus einem bestimmten Frequenzband entnommenen Sendespektren, bei dem für jede Spektrallinie eines dem bestimmten Frequenzband entnommenen Sendespektrums die folgenden Parameter berechnet (3) werden: eine mittlere Amplitude aller Linien k der in dem bestimmten Frequenzband enthaltenen Spektren, ein Störabstand RSBk, eine Amplitudenstandardabweichung ETk jeder Linie des Spektrums und ein Korrelationskoeffizient COR(k, k') einer Amplitudenkorrelation jeder Linie k mit den entsprechenden Linien der Spektren der in dem bestimmten Frequenzband enthaltenen Sendungen, dadurch gekennzeichnet, daß es darauf beruht, über ein neuronales Netz die Parameter jedes Sendespektrums mit den Parametern einer erwarteten Sendung zu vergleichen und anzugeben, daß eine Sendung einer erwarteten Sendung entspricht, wenn die durch den Vergleich zwischen den Parametern der Sendung und den erwarteten Parametern ermittelte Abweichung ein Minimum ist.

2. Verfahren nach Anspruch 1, **dadurch gekennzeichnet,** daß es darauf beruht, in dem neuronalen Netz jedem Modulations-Typ ein Neuron zuzuordnen.

3. Verfahren nach Anspruch 2, **dadurch gekennzeichnet,** daß es darauf beruht, dann anzugeben, daß ein Modulations-Typ aufgefunden wurde, wenn der Ausgangspegel des zugeordneten Neurons ein Maximum ist.

4. Verfahren nach einem der Ansprüche 2 und 3, **dadurch gekennzeichnet,** daß der Ausgangspegel $O_i$ eines Neurons i bestimmt ist durch eine Beziehung der Form:

$$O_i = \frac{1}{1 + Exp(-\sum_{j=1}^{Ni} Omega_{ij}X_j - Teta_i)}$$

worin:
- $Teta_i$ eine dem Neuron i zugeordnete Schwelle bezeichnet
- $X_j$ einen Eingang j bezeichnet
- $N_i$ die Anzahl von Eingängen des Neurons i ist
- und $Omega_{ij}$ das dem Eingang j zugewiesene Gewicht bezeichnet.

5. Verfahren nach einem der Ansprüche 2 und 3, **dadurch gekennzeichnet,** daß der Ausgangspegel $O_i$ eines Neurons bestiemmt ist durch eine Beziehung der Form:

$$O_i = SIGN \left( \sum_{j=1}^{N_i} Omega_{ij} X_j - Teta_i \right)$$

worin:
- $Teta_i$ eine dem Neuron i zugeordnete Schwelle bezeichnet
- $X_j$ einen Eingang j bezeichnet
- $N_i$ die Anzahl von Eingängen des Neurons i ist und $Omega_{ij}$ das dem Eingang j zugewiesene Gewicht bezeichnet.

6. Verfahren nach einem der Ansprüche 1 bis 4, **dadurch gekennzeichnet,** daß es darauf beruht, in einer Lehrphase die Gewichte $Omega_{ij}$ jedes einem erwarteten Sendungstyp entsprechenden Neurons einzustellen, indem für jede erwartete Sendung die Ausgangsgröße des Netzes mit der erwarteten Ausgangsgröße verglichen wird, indem der erhaltene Fehler entsprechend einem Algorithmus von einem diesen Fehler minimierenden Gradienten-Typ zurückgeführt wird.

7. Vorrichtung zur Durchführung des Verfahrens nach einem der Ansprüche 1 bis 6, **dadurch gekennzeichnet,** daß sie einen Empfänger (1) enthält, der über einen Spektralanalysator (2) und eine Einrichtung (3) zur Extraktion von Sendeparametern mit einem neuronalen Netz (4) gekoppelt ist.

8. Vorrichtung nach Anspruch 7, **dadurch gekennzeichnet,** daß die Extraktionseinrichtung einen Filterblock (9) zur Bestimmung primärer Sendeparameter enthält, der mit einem Zwischenrechnungsblock (8) und einem Sendungserfassungsblock (7) gekoppelt ist.

9. Vorrichtung nach Anspruch 8, **dadurch gekennzeichnet,** daß der Filterblock (9), der Zwischenrechnungsblock (8) und der Sendungserfassungsblock (7) durch Prozessoren zur Verarbeitung des Signals gebildet sind.

10. Vorrichtung nach Anspruch 9, **dadurch gekennzeichnet,** daß die Schritte zur Verarbeitung des Signals dazu programmiert sind, für jede Sendungsspektrallinie k eine mittlere Amplitude der Linien der Rangstufe k der in dem Frequenzband enthaltenen Spektren, einen Störabstand RSBk, eine Amplitudenstandardabweichung ETk und einen Korrelationseffizienten COR (k, k') einer Amplitudenkorrelation mit den entsprechenden Linien in den in dem Frequenzband enthaltenen Sendespektren zu berechnen.

## FIG.1

Y Antenne

Récepteur — 1

Analyseur de spectre — 2

Bloc de calcul intermédiaire — 8

Bloc de détection — 7

Bloc d'extraction

Bloc de Filtres — 9 — 6

— 3

Modulation vraie

Réseaux de neurones — 4

Module d'apprentissage

Modulation reconnue

## FIG.2

$N_1 + N_2 + N_3$

$NC_1$ Neurones

9 Neurones

10

$NC_2$ Neurones

1 Neurone

11

Validation

$X_1$

$X_j$

$X_4$

f(Xi)

$O_i$

# FIG.3

f(X)

0

X

# FIG.4